# EUROPEAN PATENT APPLICATION

(11) **EP 4 617 806 A1**
(43) Date of publication of application: **17.09.2025**
(21) Application number: 24213656.2
(22) Date of filing: 18.11.2024
(51) Int. Cl.: G05B 21/02, G05B 13/02, G05B 17/02, G06N 20/00

(54) **A SYSTEM AND A METHOD FOR MITIGATING DATA DRIFT IN AN INDUSTRIAL PLANT**

(30) Priority: 13.03.2024 IN 202441018160
(71) Applicant: ABB Schweiz AG, 5400 Baden (CH)
(72) Inventor: SHARMA, Divya Sheel, 560048 Bangalore (IN); BORRISON, Reuben, 68782 Brühl (DE); MANCA, Gianluca, 80935 München (DE); MADUSKAR, Deepti, 462042 Bhopal (IN); K R, Chandrika, 560078 Bangalore (IN); DIX, Marcel, 78476 Allensbach (DE)
(74) Representative: Zimmermann & Partner Patentanwälte mbB

(57) **Abstract**

The present disclosure discloses a system and a method for mitigating data drift in an industrial plant. The method includes monitoring, by a processor (202), one or more process parameters associated with an industrial plant (102). The method includes detecting, by processor (202), a drift in one or more process parameters based on a deviation from one or more predefined process parameters. The method includes determining, by processor (202), one or more drift context and process context based on drift and one or more process parameters. The method includes determining, by processor (202), sampling strategy from plurality of sampling strategies based on one or more drift and process context for sampling one or more process parameters using first Artificial Intelligence (AI) model (216). The method includes training, by processor (202), second Al model (302) based on sampling strategy for mitigating data drift.

## Description

### TECHNICAL FIELD

The present disclosure relates to industrial plants. More particularly, the present disclosure relates to mitigating data drift in an industrial plant.

### BACKGROUND

Operating conditions in an industrial plant change over time due to variations in raw material, change in operating procedures, equipment wear-and-tear and the like. Change in such operating conditions causes drift in one or more process parameters associated with the industrial plant. When the operating conditions change, the performance of any Artificial Intelligence (AI) and/or Machine Learning (ML) model may degrade as the models are trained using the one or more process parameters before the drift. If the models performance degrade, any automation planned in a process plant based on the model prediction is stalled. This can lead to undesired outcome such as poor product quality, poor yields, equipment failures, plant shutdowns and the like. Conventional ways to mitigate the drift and reduce the AI model degradation due to drifts in one or more process parameters uses data sampling to collect and learn about new characteristics of the one or more process parameters. However, if data sampling is not performed accurately, it might lead to inadequate and/or even negative training. Therefore, there is a need to perform data sampling accurately to train the AI model to mitigate the drift.

The information disclosed in this background of the disclosure section is only for enhancement of understanding of the general background of the invention and should not be taken as an acknowledgement or any form of suggestion that this information forms the prior art already known to a person skilled in the art.

### SUMMARY

The foregoing summary is illustrative only and is not intended to be in any way limiting. In addition to the illustrative aspects, embodiments, and features described above, further aspects, embodiments, and features will become apparent by reference to the drawings and the following detailed description.

In an embodiment, a method for mitigating data drift in an industrial plant is disclosed. The method includes monitoring, by a processor, one or more process parameters associated with an industrial plant. The method includes detecting, by the processor, a drift in the one or more process parameters based on a deviation from one or more predefined process parameters. The method includes determining, by the processor, one or more drift context and one or more process context based on the drift and the one or more process parameters. The method includes determining, by the processor, a sampling strategy from a plurality of sampling strategies based on the one or more drift context and the one or more process context for sampling the one or more process parameters using a first Artificial Intelligence (AI) model. Further the method includes training, by the processor, a second AI model based on the sampling strategy for mitigating data drift, wherein the second AI model is configured to control one or more processes in the industrial plant.

In an embodiment, system for mitigating data drift in an industrial plant is disclosed. The system includes a memory that stores processor-executable instructions. The system includes a processor configured to execute the processor-executable instructions stored in the memory and thereby configured to monitor one or more process parameters associated with an industrial plant. The processor is configured to detect a drift in the one or more process parameters based on a deviation from one or more predefined process parameters. The processor is configured to determine one or more drift context and one or more process context based on the drift and the one or more process parameters. The processor is configured to determine a sampling strategy from a plurality of sampling strategies based on the one or more drift context and the one or more process context for sampling the one or more process parameters using a first AI model. The processor is configured to train a second AI model based on the sampling strategy for mitigating data drift, wherein the second AI model is configured to control one or more processes in the industrial plant.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. The same numbers are used throughout the figures to reference like features and components. Some embodiments of at least one of device and methods in accordance with embodiments of the present subject matter are now described, by way of example only, and with reference to the accompanying figures, in which:
**Fig. 1** illustrates an environment in which some embodiments of the present disclosure may be practiced;
**Fig. 2** illustrates a system for mitigating data drift in an industrial plant, in accordance with an embodiment of the present disclosure;
**Fig. 3** illustrates a block diagram for training of a second AI model deployed in an industrial plant, in accordance with an embodiment of the present disclosure;
**Fig. 4** illustrates a flow chart illustrating training a first AI model and a second AI, in accordance with an embodiment of the present disclosure; and
**Fig. 5** illustrates a flow chart of a method for mitigating data drift in an industrial plant, in accordance with an embodiment of the present disclosure.

The figures depict embodiments of the disclosure for purposes of illustration only. One skilled in the art will readily recognize from the following description that alternative embodiments of the structures and methods illustrated herein may be employed without departing from the principles of the disclosure described herein.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the spirit and the scope of the disclosure.

The terms "comprises", "comprising", or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a device or system or apparatus proceeded by "comprises... a" does not, without more constraints, preclude the existence of other elements or additional elements in the device or system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

It shall be noted that embodiments of the present disclosure are explained with reference to a Reinforcement Learning (RL) process, wherein a first Artificial Intelligence (AI) model is an RL model. However, it shall be noted that any other AI models such as a rule-based system, a genetic algorithm and the like may be used as the first AI model.

The term "AI model(s)" used herein refers to a model that has been trained on a set of data to recognize certain patterns and/or make certain decisions without further human intervention. AI models apply different algorithms to relevant data inputs to achieve the tasks and/or output they have been trained for. The "AI model(s)" may be a continuous learning model in some embodiments.

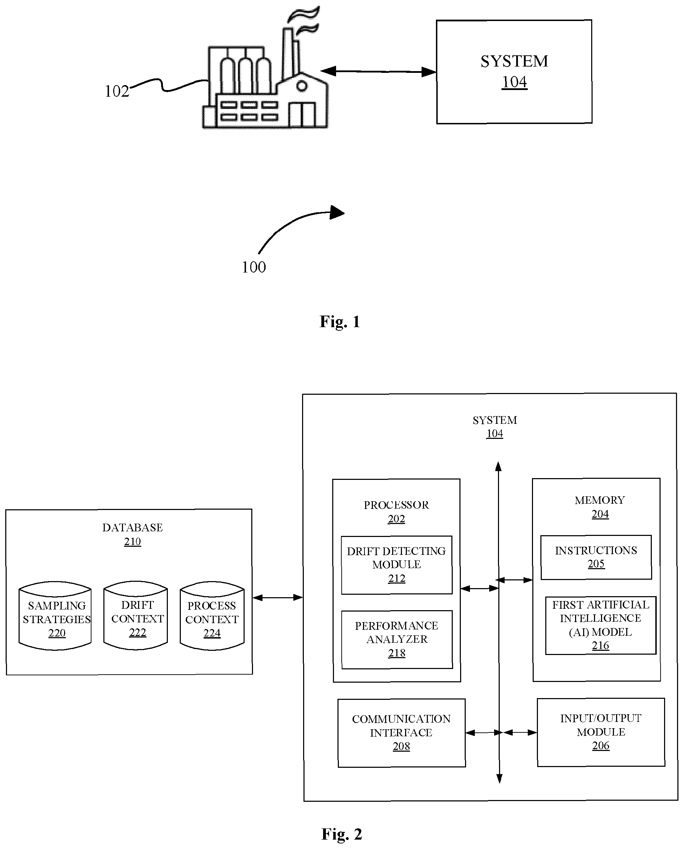

Various embodiments of the present disclosure are hereinafter explained with reference to **Figs. 1-5****.**

**Fig. 1** illustrates an environment 100 in which some embodiments of the present disclosure may be practiced. The environment 100 exemplarily depicts an industrial plant 102 and a system 104. Some examples of the industrial plant 102 may include, but are not limited to, a nuclear plant, an oil refinery, a chemical plant, a fertilizer plant, a manufacturing plant, a power plant and the like.

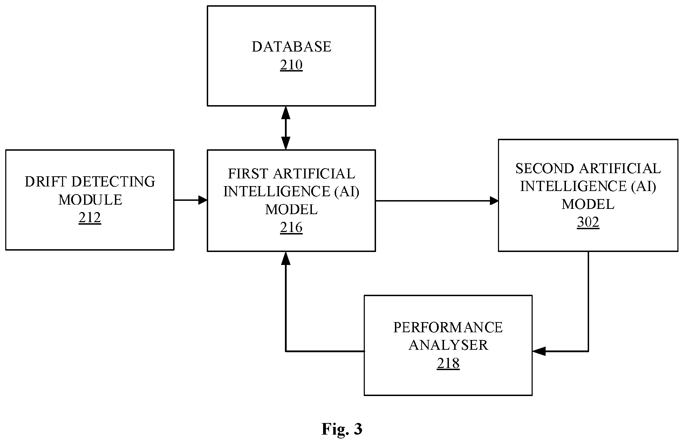

A data drift in the industrial plant 102 occurs due to deviation in one or more process parameters from one or more predefined process parameters. For example, in a steel manufacturing plant, there may be a drift in composition of iron in iron ore i.e., the one or more predefined process parameters for the composition of iron may be changed from 60% to 70%. Thus, there is a 10% drift in composition of iron. One or more AI models (such as a second AI model 302 as in Fig. 3) in the steel manufacturing plant can be trained with the one or more process parameters for performing one or more actions such as automated actions including but not limited to mixing chemicals, generating an notification, operating actuators, controlling generators and the like. While the one or more actions are performed on the basis of the one or more process parameters, any drift in the one or more process parameters need to be factored by the one or more AI models. The present disclosure provides a method and a system for mitigating the effects of drifts in the one or more process parameters.

In an embodiment, the data drift may include a concept drift. The concept drift herein refers to a deviation in an underlying goal i.e., deviation in the underlying relationship between input and output target parameters of the model, a set of targets, and/or objectives for the AI model (such as a second AI model 302 as in Fig. 3) in the industrial plant 102. It shall be noted that both data drift and concept drift can lead to a decline in the performance of the AI model. In an embodiment, the deviation in performance of the AI model against a set of targets, goals and/or objectives is measured using Key Performance Indicators (KPIs).

In an example, the industrial plant 102 may be a chemical plant. In the chemical plant, there may be a drift in sulfur content in raw materials used. i.e., the one or more predefined process parameters for the sulfur content may be 50% but, the sulfur content detected from the one or more process parameters may be 70%. Thus, there is a 20% drift in sulfur content in the raw materials used thereby leading to a drift in chemical reactions in the chemical plant. Due to this drift in the sulfur content, there may be a drift in expected output product leading to decrease in efficiency due to the drift.

In an embodiment, the system 104 is deployed in the industrial plant 102 to mitigate the drift. The operations performed by the system 104 are explained in detail next with reference to **Fig. 2****.**

**Fig. 2** illustrates a system for mitigating data drift in an industrial plant 102, in accordance with an embodiment of the present disclosure. The system 104 is deployed in the industrial plant 102 for mitigating drift in the industrial plant 102. The system 104 is depicted to include a processor 202, a memory 204, an Input/Output (I/O) module 206, and a communication interface 208. In some embodiments, the system 104 may be deployed in the premises of the industrial plant 102 or may be deployed remotely and connected to the industrial plant 102. For example, the system 104 may be deployed in a cloud and configured to receive the one or more process parameters from the industrial plant 102 over a communication network.

It may be noted that, in some embodiments, the system 104 may include more or fewer components than those depicted herein. The various components of the system 104 may be implemented using hardware, software, firmware or any combinations thereof. Further, the various components of the system 104 may be operably coupled with each other. More specifically, various components of the system 104 may be capable of communicating with each other using communication channel media (such as buses, interconnects, etc.).

In one embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a Digital Signal Processor (DSP), a processing circuitry with or without an accompanying DSP, or various other processing devices including, a microcontroller unit (MCU), a hardware accelerator, a special-purpose computer chip, or the like. The processor 202 may include, but not limited to, a drift detecting module 212, a performance analyzer 218 and the like.

The drift detecting module 212 may detect drift in one or more process parameters from one or more predefine process parameters. The performance analyzer 218 may determine a performance metric of an AI model. Further, the performance analyzer 218 determines a reward value for the AI model by comparing a performance metric with a predefined performance metric (i.e., a reference performance metric). A deviation in the performance of the AI model is determined based on the reward value. The performance of the AI model is said to be optimal if the reward value is maximum.

In one embodiment, the memory 204 is capable of storing machine executable instructions 205, referred to herein as instructions 205 and a first AI model 216. Some examples of the first AI model 216 may include, but are not limited to a RL model, rule-based system, a genetic algorithms and the like. In an embodiment, the processor 202 is embodied as an executor of software instructions. As such, the processor 202 is capable of executing the instructions 205 stored in the memory 204 to perform one or more operations described herein.

The memory 204 can be any type of storage accessible to the processor 202 to perform respective functionalities. For example, the memory 204 may include one or more volatile or non-volatile memories, or a combination thereof. For example, the memory 204 may be embodied as semiconductor memories, such as flash memory, mask ROM, PROM (programmable ROM), EPROM (erasable PROM), RAM (random access memory), etc. and the like.

In an embodiment, the processor 202 is configured to execute the instructions 205 and use a first AI model 216 to: (1) monitoring one or more process parameters associated with an industrial plant 102, (2) detecting a drift in the one or more process parameters based on a deviation from one or more predefined process parameters, (3) determining one or more drift context (222) and one or more process context 224 based on the drift and the one or more process parameters. (4) determining a sampling strategy from a plurality of sampling strategies 220 based on the one or more drift context 222 and the one or more process context 224 for sampling the one or more process parameters using a first AI model 216 and (5) training a second AI model 302 (as in Fig. 3) based on the sampling strategy for mitigating data drift, wherein the second AI model 302 is configured to control one or more processes in the industrial plant 102.

In an embodiment, the I/O module 206 may include mechanisms configured to receive inputs from and provide outputs to an operator of the system 104 (not shown in FIGS). The term 'operator of the system 104' as used herein may refer to one or more individuals whether directly or indirectly, associated with managing the system 104. To enable reception of inputs and provide outputs to the system 104, the I/O module 206 may include at least one input interface and at least one output interface. In an example, the operator of the system 104 may configure the system 104 via the at least one input interface. Examples of the input interface may include, but are not limited to, a keyboard, a mouse, a joystick, a keypad, a touch screen, soft keys, a microphone, and the like. Examples of the output interface may include, but are not limited to, a display such as a light emitting diode display, a thin-film transistor (TFT) display, a liquid crystal display, an active-matrix organic light-emitting diode (AMOLED) display, a microphone, a speaker, a ringer, and the like.

In an embodiment, the communication interface 208 may include mechanisms configured to communicate with other entities in the environment 100, for example, the industrial plant 102, a database 210 and the like. In an embodiment, the communication interface 208 of the system 104 receives a one or more process parameters to detect drift and determine one or more process context 224 and one or more drift context 222.

The system 104 is depicted to be in operative communication with a database 210. In one embodiment, the database 210 is configured to store a plurality of sampling strategy 220, a plurality of drift context 222 and plurality of process context 224. In an embodiment, the database 210 is configured to store a variety of AI prediction models based on different specifications. The variety of AI models may include, but are not limited to a Reinforcement Learning (RL) model, rule-based system, a genetic algorithms and the like..

The one or more drift context 222 may include information related to various types of drift. The drift context 222 in the database 210 includes plurality of drift context 222 that may be simulated using a simulator, may be obtained during training stage of the first AI model 216 and the like.

The process context 224 in the database 210 includes plurality of process context, wherein the plurality of process context 224 may include information based on a type of industrial plant and process conditions associated with the industrial plant.

The database 210 may include multiple storage units such as hard disks and/or solid-state disks in a redundant array of inexpensive disks (RAID) configuration. In some embodiments, the database 210 may include a storage area network (SAN) and/or a network attached storage (NAS) system. In one embodiment, the database 210 may correspond to a distributed storage system, wherein individual databases are configured to store information, such as a plurality of sampling strategy 220, a plurality of drift context 222, a plurality of process context 224, etc.

Drift mitigation in the industrial plant 102 by the system 104 is explained with reference to **Fig. 3****.**

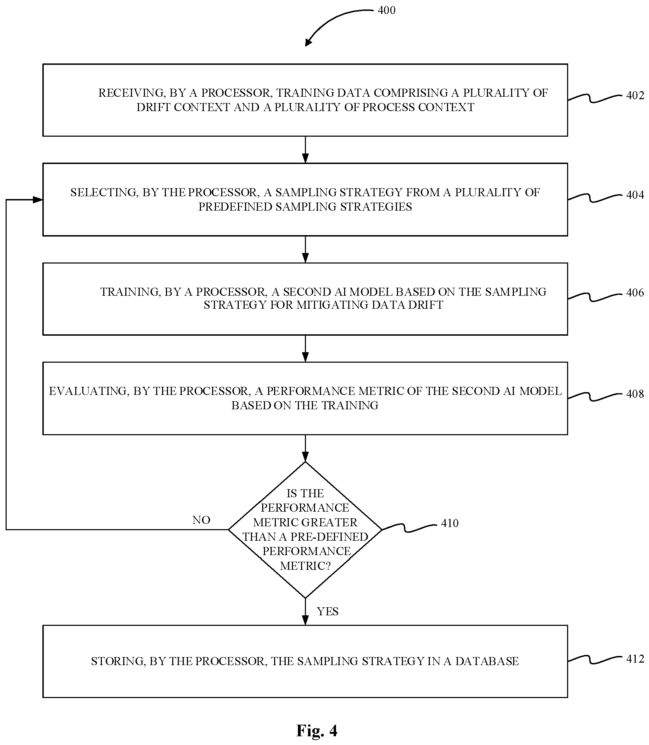

**Fig. 3** illustrates a block diagram for training of a second AI model 302 deployed in an industrial plant 102, in accordance with an embodiment of the present disclosure. The block diagram 300 includes some components of the system 104 and a second AI model 302. The second AI model 302 is deployed in the industrial plant 102 to mitigate the drift. The system 104 is deployed in the industrial plant 102 to train the second AI model 302 in the industrial plant 102. In some embodiments, the system 104 is pre-trained before being deployed in the industrial plant 102. The steps involved on training the system 104 is further explained with reference to Fig. 4.

The drift detecting module 212 monitors one or more process parameters associated with an industrial plant 102. The one or more process parameters varies based on the industrial plant 102. For example, in an steel manufacturing plant, the one or more process parameters may include, but are not limited to composition of raw materials, composition of steel, temperature, pressure and the like. In another example, in a chemical plant, the one or more process parameters may include, but are not limited to, chemical composition of raw materials, intermediate gases released, temperature, pressure and the like.

The drift detecting module 212 detects a drift in the one or more process parameters based on a deviation from one or more predefined process parameters. The drift detecting module 212 monitors one or more process parameters associated with the industrial plant 102 and detects when there is a deviation from the one or more predefined process parameters that may be stored in the memory 204. For example, in a steel manufacturing plant, there may be a drift in composition of iron in iron ore i.e., the one or more predefined process parameters for the composition of iron may be 60% but, the composition detected from the one or more process parameters may be 70%. Thus, there is a 10% drift in composition of iron. Manufacturing units in the steel manufacturing plant will be trained with iron ore having the composition of 60% iron therefore, there is a change in the steel manufactured with new composition of the iron ore leading.

The drift detecting module 212 determines one or more drift context 222 and one or more process context 224 based on the drift and the one or more process parameters. The one or more drift context 222 comprises information related to a type of drift. For example, the one or more drift context 222 may include information related to cause of drift such as change in quality of raw materials, change in composition of raw materials and the like. The one or more process context 224 are based on a type of industrial plant 102 and process conditions associated with the industrial plant 102. For example, the one or more process context 224 may include information such as wear and tear of an equipment, sensors that are not working properly, factors affecting a change in temperature and/or pressure and the like. The one or more drift context 222 and the one or more process context 224 determined by the drift detecting module 212 is given as input to the first AI model 216 .

The first AI model 216 determines at least one sampling strategy from a plurality of sampling strategies 220 based on the one or more drift context 222 and the one or more process context 224 for sampling the one or more process parameters using a first AI model 216.

The term "sampling" used herein is refers to sampling of data for training AI models. Sampling is selection of subset of data from within a statistical population to estimate characteristics of the whole population. Sampling enables AI models to work with a smaller, more manageable subset of data, rather than trying to analyze the entire data population. With a representative sample, AI models can build and run analytical models more quickly, while still producing accurate findings. In the present disclosure, sampling of one or more process parameters is performed to train the second AI model 302 to mitigate the drift due to deviation in the one or more process parameters. The first AI model 216 is configured to train the second AI model 302 based on the at least one sampling strategy 220. The training of the AI model referred to herein may include, but not limited to, retraining the AI model, fine-tuning the AI model, adapting the AI model and the like which processes data to ensure the AI model continuously learns to perform a specific task (such as selecting an optimal sampling strategy for drift mitigation).

Some examples of the plurality of sampling strategies 220 may include, but are not limited to, a random sampling strategy, a stratified sampling strategy, a systematic sampling strategy, a biased representative sampling strategy, an event-driven sampling strategy and the like.

Embodiments of the present disclosure are hereinafter explained with reference to the RL model as the first AI model 216. The first AI model 216 is pre-trained for one or more drift context 222 and one or more process context 224. However, it shall be noted that any other AI models such as a rule-based system, a genetic algorithm and the like may be used as the first AI model 216.

A genetic algorithm is defined as a type of computational optimization technique inspired by the principles of natural selection and genetics. They are used to solve complex problems by mimicking the process of evolution to improve a population of potential solutions iteratively. In the present disclosure, the first AI model 216 may be trained using a genetic algorithm such that the first AI model 216 determines plurality of sampling strategies 220 from the database. In some embodiments, the sampling strategy may be considered as a population and a fitness score is provided to each sampling strategy. In some embodiments, a crossover of the sampling strategies 220 may be performed and a fitness score may be derived for the new population resulting from the crossover. The sampling strategy 220 having the highest fitness score may be selected. For each of the plurality of sampling strategies 220, the first AI model 216 trains a second AI model 302. A performance metric of the second AI model 302 is evaluated with a predefined performance metric. A fitness value is assigned to each of the plurality of sampling strategies 220 based on the evaluation of the performance metric. The sampling strategy with the maximum fitness value will be considered as the optimal sampling strategy.

The rule-based learning is a method that identifies, learns, or evolves 'rules' to store, manipulate or apply. The defining characteristic of a rule-based learning model is the identification and utilization of a set of relational rules that collectively represent the knowledge captured by the system. Rule-based learning model uses a set of prewritten rules to make decisions and solve problems. Developers create rules based on human expert knowledge that enable the system to process input data and produce a result. In the present disclosure, a first AI model 216 may be rule-based learning model wherein a set of rules are prewritten to select an optimal sampling strategy from the plurality of sampling strategies 220.

The first AI model 216 trains a second AI model 302 based on the sampling strategy for mitigating data drift, where the second AI model 302 is configured to control one or more processes in the industrial plant 102. The second AI model 302 may be any AI model. In some embodiments, a single AI model may be used to implement the functions as described above.

The performance analyzer 218 in the processor 202 compares a performance metric of the second AI model 302 with a predefined performance metric. The processor 202 generates at least one new sampling strategy when the performance metric of the second AI model 302 is less than the predefined performance metric. When the performance metric of the second AI model 302 is greater than the predefined performance metric, the sampling strategy used to train the second AI model 302 is considered as an optimal sampling strategy.

For example, if the second AI model 302 is deployed in a steel manufacturing plant, the performance metric may be based on comparing final composition of the steel with a predefined desired composition. For example, the one or more process parameters is found to be 80% iron and 5% carbon. However, the one or more predefined process parameters is 99% iron and less than 0.25% carbon. Therefore, the performance metric of the second AI model 302 is less than the predefined performance metric.

In an embodiment, the performance analyzer 218 generates a reward value for the first AI model 216. The reward value is a positive value when the performance metric of the second AI model 302 is greater than the predefined performance metric and the reward value is a negative value when the performance metric of the second AI model 302 is less than the predefined performance metric. For example let the initial reward value of the first AI model 216 be 50, if the performance metric of the second AI model 302 is less than the predefined performance metric, the performance analyzer 218 may generate a reward value of 25. In another example, if the performance metric of the second AI model 302 is greater than the predefined performance metric, the performance analyzer 218 may generate a reward value of 75. The goal of the system 104 is to obtain a maximum reward value. The greater the reward value, the sampling strategy is said to be optimal.

For example, if the industrial plant 102 comprises a stirred tank reactor, one or more predefined process parameters may be: reactant concentration of normal distribution around 1.0 mole, small standard deviation, reaction temperature of 80⁰ C, operating pressure is 2 Bar and the like. The drift detecting module 212 may detects a drift in the concentration of normal distribution, wherein the concentration of normal distribution is around 0.8 M, due to change in supplier. The drift in the concentration of normal distribution also leads to increase in pressure from 2 bar to 5 bar. Here, the drift detecting module 212 determines the one or more drift context 222 to be "input data drift" and the one or more process context 224 to be information about the "increase in pressure (from 2 bar to 5 bar)". The first AI model 216 may determine a sampling strategy from one or more sampling strategies 220. The second AI model 302 that is deployed in the stirred tank reactor is trained using the sampling strategy with initial reward value of 900.

The performance analyzer 218 compares the performance metric of the second AI model 302 with the predefined performance metric. For example, after training the second AI model 302 in the stirred tank reactor, with the sampling strategy, if the normal distribution around 1.0 mole with a small deviation and the operating pressure is 2 Bar which is same as the one or more predefined process parameters, the performance metric is greater than the predefined performance metric thus, the new reward value is 1000. Therefore, the reward value is said to be a positive reward value.

In an embodiment, the reward value is based on the performance metric

In an embodiment, when the first AI model 216 fails to select an optimal sampling strategy from the plurality of predefined sampling strategies 220, the processor 202 generates a new sampling strategy. The plurality of predefined sampling strategies 220 may include, but not limited to, a random sampling strategy, a stratified sampling strategy, a systematic sampling strategy, a biased representative sampling strategy, an event-driven sampling strategy and the like. The new sampling strategy is generated such that when the second AI model 302 is trained using the sampling strategy, the performance metric of the second AI model 302 is greater than the predefined performance metric and the reward value is maximum.

The method 400 for training the first AI model 216 and the second AI model 302 is explained further with reference to **Fig. 4****.**

**Fig. 4** illustrates a flow chart of training a first AI model 216 and a second AI model 302, in accordance with an embodiment of the present disclosure.

At 402, the processor 202 receives training data comprising a plurality of drift context 222 and a plurality of process context 224 from the database 210. The processor 202 may receive the plurality of drift context 222 and the plurality of process context 224 from other entities and not limited to database 210. In an embodiment, the plurality of drift context 222 and the plurality of process context 224 may be simulated using a simulator. The plurality of drift context 222 comprises information related to a type of drift. For example, the plurality of drift context 222 may include information related to quality of raw materials, change in composition of raw materials and the like. The plurality of process context 224 are based on a type of industrial plant 102 and process conditions associated with the industrial plant 102. For example, the plurality of process context 224 may include information such as wear and tear of an equipment, sensors that are not working properly, factors affecting a change in temperature, pressure and the like.

At 404, the processor 202 selects a sampling strategy from a plurality of predefined sampling strategies 220 for each combination of drift context 222 and process context 224 in the training data. The plurality of predefined sampling strategies 220 may include, but not limited to, a random sampling strategy, a stratified sampling strategy, a systematic sampling strategy, a biased representative sampling strategy, an event-driven sampling strategy and the like.

At 406, the processor 202 trains a second AI model 302 based on the sampling strategy for mitigating the drift.

At 408, the performance analyzer 218 in the processor 202 evaluates a performance metric of the second AI model 302 by comparing the performance metric of the second AI model 302 with a predefined performance metric.

At 410, the performance analyzer 218 determines if the performance metric of the second AI model 302 is greater than or less that the predefined performance metric. When the performance metric of the second AI model 302 is less than the predefined performance metric, a new sampling strategy 220 is selected from the database 210.

At 412, when the performance metric of the second AI model 302 is greater than the predefined performance metric, the sampling strategy 220 used to train the second AI model 302 is stored in the database 210 with the corresponding process context 224 and the drift context 222.

The disclosed method 400 with reference to **Fig. 4****,** may be implemented using software including computer-executable instructions stored on one or more computer-readable media (e.g., non-transitory computer-readable media, such as one or more optical media discs, volatile memory components (e.g., Dynamic random access memory (DRAM)or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

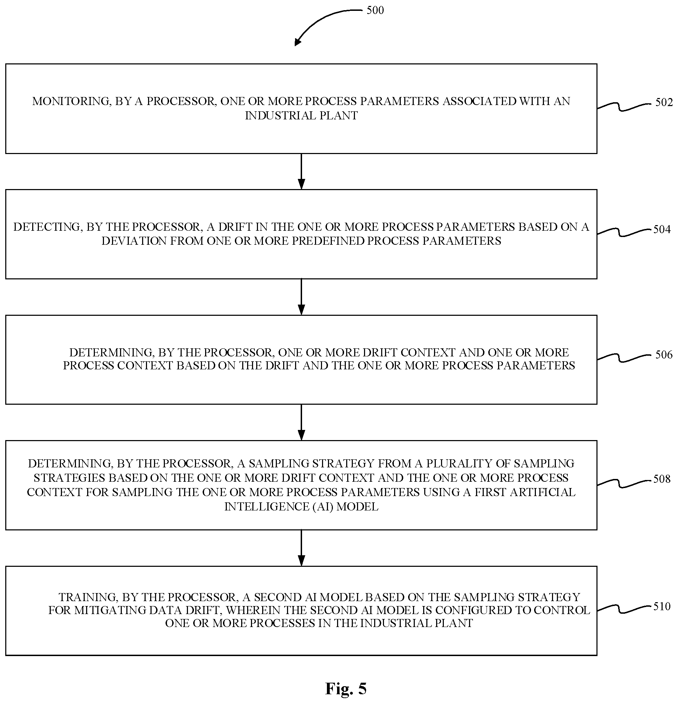

The method 500 for mitigating data drift in an industrial plant 102 is explained further with reference to **Fig. 5****.**

**Fig. 5** illustrates a flow chart of a method for mitigating data drift in an industrial plant 102, in accordance with an embodiment of the present disclosure.

At 502, the processor 202 monitors one or more process parameters associated with an industrial plant 102.

At 504, the processor 202 detects a drift in the one or more process parameters based on a deviation from one or more predefined process parameters.

At 506, the processor 202 determines one or more drift context 222 and one or more process context 224 based on the drift and the one or more process parameters.

At 508, the processor 202 determines a sampling strategy from a plurality of sampling strategies 220 based on the one or more drift context 222 and the one or more process context 224 for sampling the one or more process parameters using a first AI model 216.

At 510, the processor 202 trains a second AI model 302 based on the sampling strategy for mitigating data drift, wherein the second AI model 302 is configured to control one or more processes in the industrial plant 102.

The disclosed method 500 with reference to **Fig. 5****,** may be implemented using software including computer-executable instructions stored on one or more computer-readable media (e.g., non-transitory computer-readable media, such as one or more optical media discs, volatile memory components (e.g., DRAM or SRAM), or non-volatile memory or storage components (e.g., hard drives or solid-state non-volatile memory components, such as Flash memory components) and executed on a computer (e.g., any suitable computer, such as a laptop computer, net book, Web book, tablet computing device, smart phone, or other mobile computing device). Such software may be executed, for example, on a single local computer.

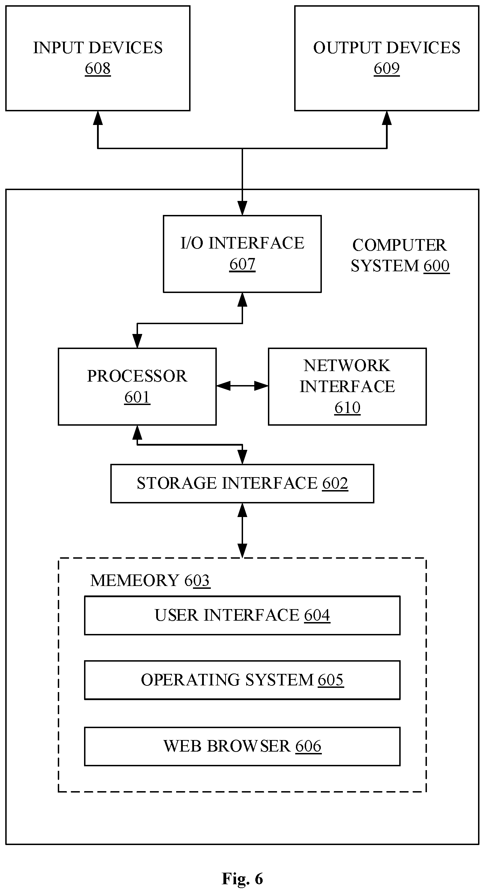

**Fig. 6** illustrates a block diagram of an exemplary computer system 600, for implementing embodiments consistent with the present disclosure. The computer system 600 may be, without limitation to, the system 104 ,or the second AI model 302. The computer system 600 may include a central processing unit ("CPU" or "processor") 601. The processor 601 may include at least one data processor for executing processes. The processor 601 may include specialized processing units such as, integrated system (bus) controllers, memory management control units, floating point units, graphics processing units, digital signal processing units, etc.

The processor 601 may be disposed in communication with one or more input/output (I/O) devices 608 and 609 via I/O interface 607. The I/O interface 607 may employ communication protocols/methods such as, without limitation, audio, analog, digital, monaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 607, the computer system 600 may communicate with one or more I/O devices 608 and 609. For example, the input devices 608 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output devices 609 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the processor 601 may be disposed in communication with external elements such as external computer systems, servers, network elements. The network interface 610 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc.

In some embodiments, the processor 601 may be disposed in communication with a memory 603 (e.g., RAM, ROM, etc.) via a storage interface 602. The storage interface 602 may connect to memory 603 including, without limitation, memory drives, removable disc drives, etc., employing connection protocols such as, serial advanced technology attachment (SATA), Integrated Drive Electronics (IDE), IEEE-1394, Universal Serial Bus (USB), fibre channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 603 may store a collection of program or database components, including, without limitation, user interface 604, an operating system 605, a web browser 606 etc. In some embodiments, computer system 600 may store user/application data, such as, the data, variables, records, etc., as described in this disclosure. Such databases may be implemented as fault-tolerant, relational, scalable, secure databases such as Oracle ^{®} or Sybase^{®}.

The operating system 605 may facilitate resource management and operation of the computer system 600. Examples of operating systems include, without limitation, APPLE MACINTOSH^{®} OS X, UNIX^{®}, UNIX-like system distributions (E.G., BERKELEY SOFTWARE DISTRIBUTION^{™} (BSD), FREEBSD^{™}, NETBSD^{™}, OPENBSD^{™}, etc.), LINUX DISTRIBUTIONS^{™} (E.G., RED HAT^{™}, UBUNTU^{™}, KUBUNTU^{™}, etc.), IBM^{™} OS/2, MICROSOFT^{™} WINDOWS^{™} (XP^{™}, VISTA^{™}/7/8, 10 etc.), APPLE^{®} IOS^{™}, GOOGLE^{®} ANDROID^{™}, BLACKBERRY^{®} OS, or the like.

In some embodiments, the computer system 600 may implement the web browser 606 stored program components. The web browser 606 may be a hypertext viewing application, such as MICROSOFT^{®} INTERNET EXPLORER^{®}, GOOGLE^{™} CHROME^{™}, MOZILLA^{®} FIREFOX^{®}, APPLE^{®} SAFARI^{®}, etc. Secure web browsing may be provided using Secure Hypertext Transport Protocol (HTTPS), Secure Sockets Layer (SSL), Transport Layer Security (TLS), etc. Web browsers 606 may utilize facilities such as AJAX, DHTML, ADOBE^{®} FLASH^{®}, JAVASCRIPT^{®}, JAVA^{®}, Application Programming Interfaces (APIs), etc. In some embodiments, the computer system 600 may implement a mail server stored program component. The mail server may be an Internet mail server such as Microsoft Exchange, or the like. The mail server may utilize facilities such as Active Server Pages (ASP), ACTIVEX^{®}, ANSI^{®} C++/C#, MICROSOFT^{®}, .NET, CGI SCRIPTS, JAVA^{®}, JAVASCRIPT^{®}, PERL^{®}, PHP, PYTHON^{®}, WEBOBJECTS^{®}, etc. The mail server may utilize communication protocols such as Internet Message Access Protocol (IMAP), Messaging Application Programming Interface (MAPI), MICROSOFT^{®} exchange, Post Office Protocol (POP), Simple Mail Transfer Protocol (SMTP), or the like. In some embodiments, the computer system 600 may implement a mail client stored program component. The mail client may be a mail viewing application, such as APPLE^{®} MAIL, MICROSOFT^{®} ENTOURAGE^{®}, MICROSOFT^{®} OUTLOOK^{®}, MOZILLA^{®} THUNDERBIRD^{®}, etc.

Some advantages of the present disclosure is providing a method and system to mitigate drift in an industrial plant. By mitigating drift in an industrial plant, the efficiency of the industrial plant is increased, Further, the present disclosure provides a method to fine tune AI models in an industrial plant thereby reducing the time taken to re-train the entire model for the drifted data. The present disclosure also eliminates the need for adequate date to efficiently re-train the AI model for the drift in one or more process parameters. Therefore, the system is also robust and easy to implement without additional need of data.

The described operations may be implemented as a method, system or article of manufacture using standard programming and/or engineering techniques to produce software, firmware, hardware, or any combination thereof. The described operations may be implemented as code maintained in a "non-transitory computer readable medium", where a processor may read and execute the code from the computer readable medium. The processor is at least one of a microprocessor and a processor capable of processing and executing the queries. A non-transitory computer readable medium may include media such as magnetic storage medium (e.g., hard disk drives, floppy disks, tape, etc.), optical storage (CD-ROMs, DVDs, optical disks, etc.), volatile and non-volatile memory devices (e.g., EEPROMs, ROMs, PROMs, RAMs, DRAMs, SRAMs, Flash Memory, firmware, programmable logic, etc.), etc. Further, non-transitory computer-readable media may include all computer-readable media except for a transitory. The code implementing the described operations may further be implemented in hardware logic (e.g., an integrated circuit chip, Programmable Gate Array (PGA), Application Specific Integrated Circuit (ASIC), etc.).

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer readable storage medium refers to any type of physical memory on which information or data readable by a processor may be stored. Thus, a computer readable storage medium may store instructions for execution by one or more processors, including instructions for causing the processor(s) to perform steps or stages consistent with the embodiments described herein. The term "computer readable medium" should be understood to include tangible items and exclude carrier waves and transient signals, i.e., are non-transitory. Examples include random access memory (RAM), read-only memory (ROM), volatile memory, non-volatile memory, hard drives, CD ROMs, DVDs, flash drives, disks, and any other known physical storage media.

Finally, the language used in the specification has been principally selected for readability and instructional purposes, and it may not have been selected to delineate or circumscribe the inventive subject matter. Accordingly, the disclosure of the embodiments of the disclosure is intended to be illustrative, but not limiting, of the scope of the disclosure.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

## Claims

1. A method for mitigating data drift in an industrial plant (102), comprising:
monitoring, by a processor (202), one or more process parameters associated with an industrial plant (102);
detecting, by the processor (202), a drift in the one or more process parameters based on a deviation from one or more predefined process parameters;
determining, by the processor (202), one or more drift context (222) and one or more process context (224) based on the drift and the one or more process parameters;
determining, by the processor (202), a sampling strategy from a plurality of sampling strategies (220) based on the one or more drift context (222) and the one or more process context (224) for sampling the one or more process parameters using a first Artificial Intelligence (AI) model (216); and
training, by the processor (202), a second AI model (302) based on the sampling strategy for mitigating data drift, wherein the second AI model (302) is configured to control one or more processes in the industrial plant (102).

2. The method as claimed in claim 1, wherein the first AI model (216) is trained using one of: Reinforcement Learning (RL) process, rule-based system and a genetic algorithm.

3. The method as claimed in claim 1 or 2, wherein training the first AI model (216) and the second AI model (302) comprises:
providing, by the processor (202), training data comprising a plurality of drift context (222) and a plurality of process context (224) to the first AI model (216);
configuring, by the processor (202), the first AI model (216) to train the second AI model (302) using at least one sampling strategy from a plurality of predefined sampling strategies (220) on the training data; and
selecting, by the processor (202), an optimal sampling strategy based on a performance metric of the second AI model (302) for each combination of drift context and process context (224) in the training data.

4. The method as claimed in claim 3, further comprising:
generating, by the processor (202), at least one new sampling strategy when the first AI model (216) fails to identify an optimal sampling strategy from the plurality of predefined sampling strategies (220).

5. The method as claimed in any of the previous claims, further comprising:
comparing, by the processor (202), a performance metric of the second AI model (302) with a predefined performance metric; and
generating, by the processor (202), at least one new sampling strategy when the performance metric of the second AI model (302) is less than the predefined performance metric.

6. The method as claimed in any of the claims 3-6, further comprising:
generating, by the processor (202), a reward value for the first AI model (216) based on the performance metric, wherein
the reward value is a positive value when the performance metric of the second AI model (302) is greater than a predefined performance metric; and
the reward value is a negative value when the performance metric of the second AI model (302) is less than the predefined performance metric.

7. The method as claimed in any of the previous claims, wherein the plurality of sampling strategies (220) are: a random sampling strategy, a stratified sampling strategy, a systematic sampling strategy, a biased representative sampling strategy, and an event-driven sampling strategy.

8. The method as claimed in any of the previous claims, wherein the one or more drift context (222) comprise information related to a type of drift.

9. The method as claimed in any of the previous claims, wherein the one or more process context (224) are based on a type of industrial plant (102) and process conditions associated with the industrial plant (102).

10. A system for mitigating data drift in an industrial plant (102), comprising:
a processor (202); and
a memory, wherein the memory stores processor-executable instructions, which, on execution, cause the processor (202) to:
monitor one or more process parameters associated with an industrial plant (102);
detect a drift in the one or more process parameters based on a deviation from one or more predefined process parameters;
determine one or more drift context (222) and one or more process context (224) based on the drift and the one or more process parameters;
determine a sampling strategy from a plurality of sampling strategies (220) based on the one or more drift context (222) and the one or more process context (224) for sampling the one or more process parameters using a first AI model (216); and
train a second AI model (302) based on the sampling strategy for mitigating data drift, wherein the second AI model (302) is configured to control one or more processes in the industrial plant (102).

11. The system as claimed in claim 10, wherein the processor (202) is configured to train the first AI model (216) using one of: Reinforcement Learning (RL) process, rule-based system and a genetic algorithm.

12. The system as claimed in claim 10 or 11, wherein the processor (202) is configured to train the first AI model (216) and the second AI model (302), wherein the processor is configured to:
provide training data comprising a plurality of drift context (222) and a plurality of process context (224) to the first AI model (216);
configure the first AI model (216) to train the second AI model (302) using at least one sampling strategy from a plurality of predefined sampling strategies (220) on the training data; and
select an optimal sampling strategy based on a performance metric of the second AI model (302) for each combination of drift context and process context (224) in the training data.

13. The system as claimed in claim 12, wherein the processor (202) is further configured to:
generate at least one new sampling strategy when the first AI model (216) fails to identify an optimal sampling strategy from the plurality of predefined sampling strategies (220).

14. The system as claimed in any of the claims 10 - 13, wherein the processor (202) is further configured to:
compare a performance metric of the second AI model (302) with a predefined performance metric; and
generate at least one new sampling strategy when the performance metric of the second AI model (302) is less than the predefined performance metric.

15. The system as claimed in any of the claims 12 - 14, wherein the processor (202) is further configured to:
generate a reward value for the first AI model (216) based on the performance metric, wherein
the reward value is a positive value when the performance metric of the second AI model (302) is greater than a predefined performance metric; and
the reward value is a negative value when the performance metric of the second AI model (302) is less than the predefined performance metric;
and/or wherein
the processor (202) is configured to determine the sampling strategy from the plurality of sampling strategies (220) selected from a group comprising: a random sampling strategy, a stratified sampling strategy, a systematic sampling strategy, a biased representative sampling strategy, and an event-driven sampling strategy;
and/or wherein
the processor (202) is configured to detect the one or more drift context (222),
wherein the one or more drift context (222) comprise information related to a type of drift;
and/or wherein
the processor (202) is configured to detect the one or more process context (224), wherein the one or more process context (224) are based on a type of industrial plant (102) and process conditions associated with the industrial plant (102).
